(19) Europäisches Patentamt / European Patent Office / Office européen des brevets

(11) **EP 2 694 320 B1**

(12) **EUROPÄISCHE PATENTSCHRIFT**

(45) Veröffentlichungstag und Bekanntmachung des Hinweises auf die Patenterteilung:
**15.05.2019  Patentblatt 2019/20**

(21) Anmeldenummer: **12713091.2**

(22) Anmeldetag: **29.03.2012**

(51) Int Cl.:
*B60L 3/04* *(2006.01)*  *B60L 3/10* *(2006.01)*
*B60L 15/20* *(2006.01)*  *B60L 3/00* *(2019.01)*
*B60L 15/02* *(2006.01)*

(86) Internationale Anmeldenummer:
**PCT/EP2012/055615**

(87) Internationale Veröffentlichungsnummer:
**WO 2012/136556 (11.10.2012 Gazette 2012/41)**

(54) **VERFAHREN ZUM BETREIBEN EINES FAHRZEUGS**

METHOD FOR OPERATING A VEHICLE

PROCÉDÉ PERMETTANT DE FAIRE FONCTIONNER UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2011  DE 102011016357**
**18.04.2011  DE 102011017464**

(43) Veröffentlichungstag der Anmeldung:
**12.02.2014  Patentblatt 2014/07**

(73) Patentinhaber:
• **Ebert, Klaus**
**13591 Berlin (DE)**
• **Meyer, Stefan**
**13591 Berlin (DE)**
• **Resche, Eberhard**
**09217 Burgstädt (DE)**

(72) Erfinder:
• **EBERT, Klaus**
**13591 Berlin (DE)**

• **MEYER, Stefan**
**13591 Berlin (DE)**

(74) Vertreter: **Kruspig, Volkmar**
**Meissner Bolte Patentanwälte**
**Rechtsanwälte Partnerschaft mbB**
**Postfach 86 06 24**
**81633 München (DE)**

(56) Entgegenhaltungen:
**EP-A1- 1 798 093    EP-A1- 1 798 093**
**EP-A2- 1 982 886    WO-A1-98/19875**
**WO-A1-98/19875     WO-A1-2010/119740**
**DE-A1- 10 332 228   DE-A1- 10 332 228**
**JP-A- S5 826 570    US-A- 5 991 671**
**US-A1- 2004 176 899  US-A1- 2009 039 809**
**US-A1- 2010 004 090  US-A1- 2010 004 090**
**US-A1- 2010 134 053**

**Beschreibung**

Die Erfindung betrifft ein Verfahren zum Betreiben eines Fahrzeugs mit mindestens einer gelenkten und mindestens einer angetriebenen Achse, wobei mindestens die angetriebene Achse mindestens zwei Radnabenelektromotoren besitzt, welche in das jeweilige Antriebsrad integriert sind, weiterhin mit Hilfe einer elektronischen Steuerung für die Radnabenmotoren unter Bildung eines elektronischen Differentials sowie auf der Basis von Sensorsignalen, die den Fahrvorgaben entsprechen, gemäß Patentanspruch 1.

Bei der Konstruktion eines Elektrofahrzeuges wird bislang meist der konventionelle Weg eingeschlagen, der sich stark an dem Aufbau benzingetriebener Fahrzeuge orientiert. Dabei wird ein einzelner Elektromotor verwendet, der über ein mechanisches Differential und eine Hinterachse die Hinterräder antreibt. Während der Elektromotor an sich eine hohe Effektivität besitzt, wird durch die dabei entstehenden mechanischen Leistungsverluste die Effektivität des Elektroantriebes insgesamt verringert und entsprechend die Leistung und die Reichweite des Fahrzeuges reduziert. Versucht man nun, diese mechanischen Verluste zu umgehen, gelangt man in letzter Konsequenz zum Radnabenmotor, der eine spezielle Form eines dreiphasigen, bürstenlosen Gleichstrommotors (BLDC-Motors) darstellt. Diese werden zusammen mit einer geeigneten Steuerung z.B. in zweirädrigen Elektrorollern eingesetzt, während der Einsatz in Fahrzeugen mit zwei oder mehr direkt angetriebenen Rädern problematisch ist. Gemäß dem Stand der Technik müßte für jeden Motor eine eigene Steuerung verwendet werden, woraus sich Synchronisationsprobleme ergeben. Bei unterschiedlichen Belastungen der Antriebsräder, etwa bei veränderten Untergründen oder Kurvenfahrten, müssen die Steuerungen nicht nur auf die Soll-Vorgabe des Fahrers reagieren, sondern auch auf den Zustand der jeweils anderen Steuerung. Wird dies nicht beachtet, resultiert daraus eine unsichere Fahrlage, das Fahrzeug kann unter Umständen ausbrechen etc., die Sicherheit ist demnach nicht in jeder Situation gewährleistet.

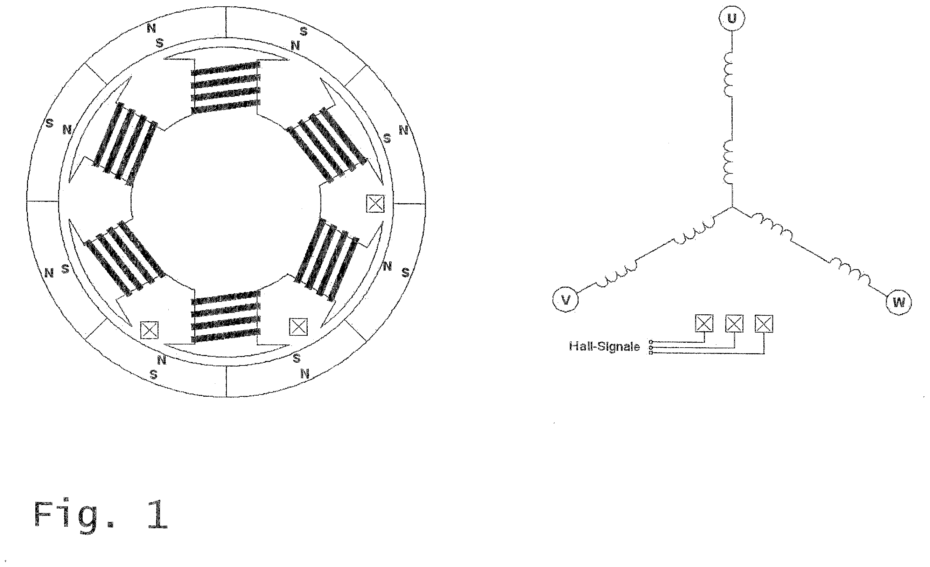

BLDC-Motoren bestehen aus einer feststehenden, ringförmigen Anordnung von Spulen (dem Stator), sowie einer ebenfalls ringförmigen Anordnung von Permanentmagneten (dem Rotor), die drehbar gelagert ist und die Spulen umläuft (siehe Fig. 1). Der Motor kann in Bewegung gesetzt werden, indem an geeignete Spulen Spannung angelegt wird und durch das so erzeugte Magnetfeld den Rotor ein Stück weiter ziehen. In den allermeisten Fällen sind diese Motoren dreiphasig ausgelegt, d.h. es gibt drei Gruppen von Spulen und ebenso drei Anschlüsse, die aus dem Motor herausgeführt werden und mit U, V und W bezeichnet sind. Die Steuerung, die diese drei Anschlüsse mit Spannung versorgt, muss dafür Sorge tragen, dass in jedem Moment die geeigneten Magnetfelder erzeugt werden, um einen gleichmäßigen Lauf des Motors zu ermöglichen. Um diese Umschaltung im richtigen Moment durchführen zu können bzw. auf Lastschwankungen reagieren zu können, ist es erforderlich, Positionsinformationen des Motors zu erhalten. Meist werden diese durch drei Hall-Sensoren geliefert. Deren Signale werden von der Steuerung ausgewertet und dienen zur Bestimmung der Umschaltzeitpunkte der Motoranschlüsse. In der Patentschrift DE 11 2004 002 360 T5 ist beispielsweise die Ausführung eines Linearmotors beschrieben, der den oben genannten Prinzipien genügt.

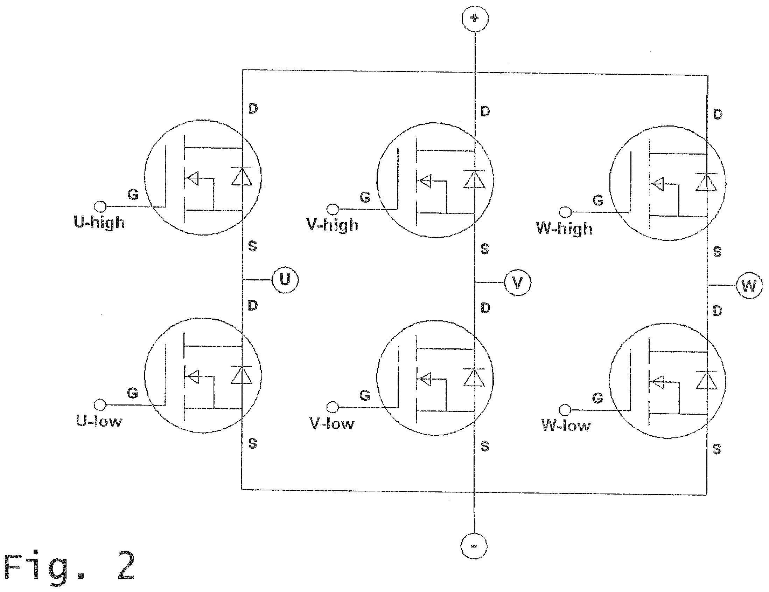

Die drei Anschlüsse U, V und W des jeweils eingesetzten Motors können über je eine Halbbrückenschaltung von Leistungshalbleitern sowohl mit dem positiven als auch mit dem negativen Pol der Spannungsquelle verbunden werden (siehe Fig. 2). Es ist dafür Sorge zu tragen, dass zu keinem Zeitpunkt beide Transistoren einer Halbbrücke gleichzeitig öffnen, da dies zu einem Kurzschluss und zur Zerstörung der Transistoren führen würde. Um die Leistung bzw. die Geschwindigkeit des Motors variieren zu können, könnte prinzipiell die Spannung verändert werden. Da die Spannungsquelle jedoch vorgegeben ist und eine entsprechende Ansteuerung der schaltenden Halbleiter zu enormen Verlusten in den Halbleitern führen würde, ist diese Methode nicht realisierbar.

Statt dessen wird die Spannung gepulst, d.h. in sehr schneller Folge ein- und ausgeschaltet. So wird der Leistungsverlust in den Halbleitern gering gehalten, da diese entweder völlig sperren oder völlig geöffnet sind. Über diese Pulsweitenmodulation (PWM) lässt sich die Motorleistung fein steuern. Die günstigste Schaltfrequenz hängt von den verwendeten Halbleitern und den Charakteristiken des jeweiligen Motors ab. Zu hohe Frequenzen erhöhen die Umschaltverluste, zu niedrige Frequenzen können zu hörbaren Schwingungen führen und den Fahrkomfort mindern.

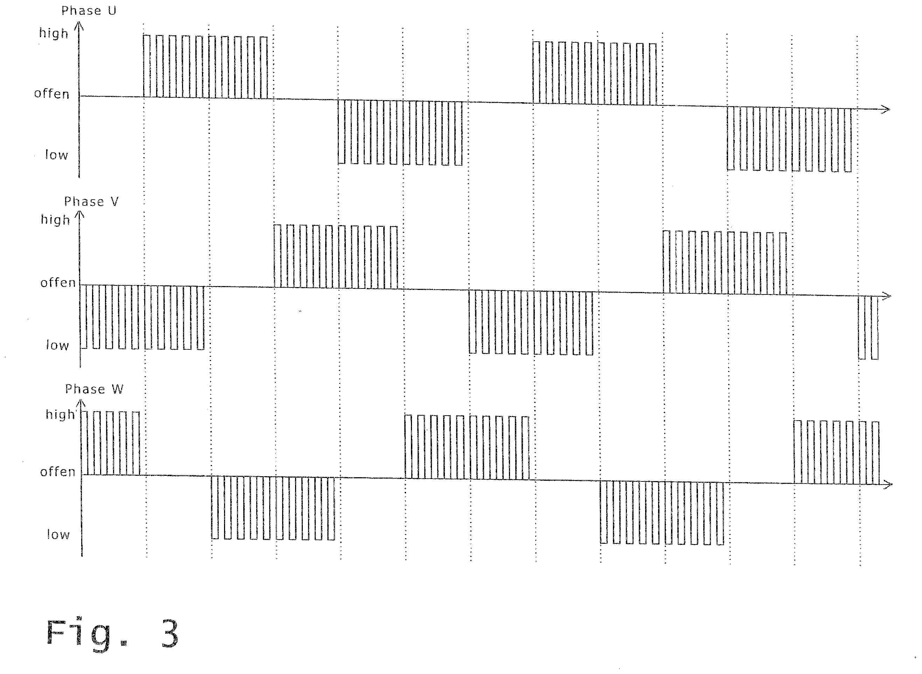

Die einfachste Methode der Ansteuerung eines BLDC-Motors besteht darin, an jeweils zwei der drei Motoranschlüsse Spannung anzulegen und diese gemäß der Positionsinformation durch die Hall-Sensoren folgerichtig weiterzuschalten. Die PWM erfolgt dabei mit Pulsen konstanter Breite entsprechend der geforderten Leistung (siehe Fig. 3). Dieses Blocksteuerung genannte Verfahren führt durch das harte Umschalten zwischen den drei Phasen zu einer vergleichsweise hohen Geräuschentwicklung, die sich in Fahrzeugen unangenehm bemerkbar machen kann und auch auf Energieverluste hinweist.

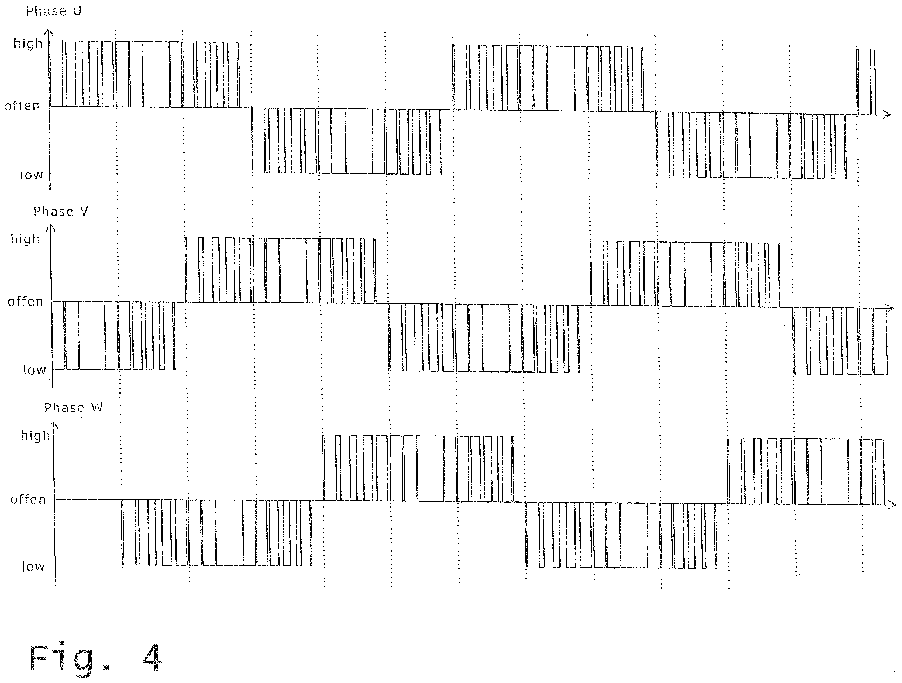

Die optimalste Ansteuerung eines sich drehenden Motors erfolgt mit einem sinusförmig modulierten Signal. Die strenge zeitliche Trennung zwischen den einzelnen Phasen der Ansteuerung entfällt hierbei, jeder der drei Anschlüsse wird (über die PWM) mit einem sinusförmigen Signal angesteuert. Die drei Signale sind um jeweils 120° zueinander phasenverschoben (siehe Fig. 4). Da das erzeugte Magnetfeld sich kontinuierlich dreht, läuft der Motor erheblich ruhiger als bei der Blocksteuerung. Außerdem entsteht gegenüber dem BlockBetrieb eine Energieersparnis von bis zu 10%.

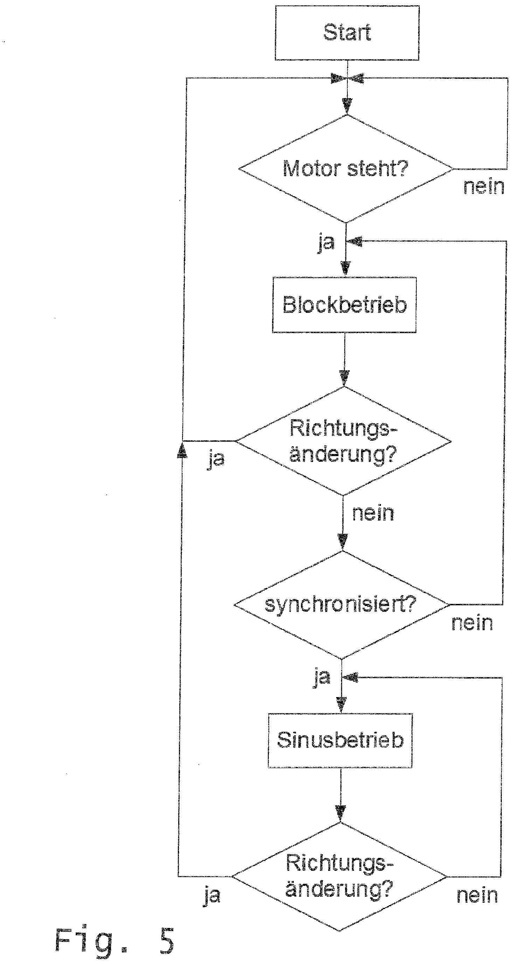

Die Erzeugung eines solchen Sinussignals ist zwar aufwendiger, aber mit einem Mikrokontroller problemlos zu bewerkstelligen. Es wird eine genauere Kenntnis der momentanen Position des Motors benötigt, als es die Hall-Sensoren unmittelbar liefern. Daher muss die Erzeugung der Sinus-Signale mit den Signalen der Hall-Sensoren synchronisiert werden. Beim Anlaufen des Motors, wo diese Synchronisation noch nicht erfolgt ist, wird daher zunächst die Blocksteuerung verwendet. Nach einigen Signalen der Hall-Sensoren, wenn die Position mit genügender Genauigkeit bekannt ist, wird in die eigentliche Sinus-Steuerung umgeschaltet (siehe Ablaufdiagramm gemäß Fig. 5). Vor einer Änderung der Drehrichtung des Motors muss zunächst sichergestellt sein, dass sich der Motor im Stillstand befindet.

Die BLDC-Steuerung benötigt ein Signal, anhand dessen sie den Motor in Bewegung versetzt. Dieses Signal kann im einfachsten Fall aus einer analogen Spannung bestehen, um den Motor gemäß einer Kennlinie mit Leistung zu versorgen. Ebenso können Steuerungen aber auch eine digitale Schnittstelle besitzen. Desweiteren können Steuerungen auch in zwei verschiedenen Modi arbeiten bzw. zwischen ihnen umgeschaltet werden. Im einen Modus erhält die Steuerung eine Vorgabe über die Motorleistung. Hier wirkt sich die Vorgabe direkt auf die Amplitude des Sinus-Signals bzw. die Breite der PWM-Signale und somit auf die abgegebene elektrische Leistung aus, während sich die Drehzahl in etwa reziprok zur mechanischen Belastung des Motors verhält. Dies entspricht dem vom PKW her bekannten und gewöhnten Fahrgefühl. Führt der Weg z.B. bergauf, muss das Gaspedal weiter gedrückt werden, um das Tempo zu halten, da eine höhere Leistung erforderlich ist. Im anderen Modus erhält die Steuerung eine Vorgabe über die Drehzahl des Motors und versucht mit einer internen Regelung der elektrischen Leistung diese Drehzahl zu erreichen und zu halten.

Aus dem Stand der Technik ist eine Antriebseinrichtung für ein Flurförderfahrzeug gemäß DE 10 2004 014 773 A1 bekannt, welche einen um eine Vertikalachse drehbaren Drehschemel, zwei parallel und spiegelsymmetrisch zur Vertikalachse am Drehschemel gelagerte Antriebsräder und eine axial zwischen den Antriebsrädern angeordnete Einrichtung zum Erzeugen einer Differentialwirkung zwischen den Antriebsrädern aufweist. Gemäß einer Ausführungsform ist jedes Antriebsrad mit einem eigenen, als Radnabenmotor ausgebildeten Motor gekoppelt. Die Differentialwirkung zwischen den beiden Antriebsrädern wird bei Verwendung von Elektromotoren unter Bildung eines elektrischen Differentials rein elektrisch erzeugt, so dass ein mechanisches Differentialgetriebe nicht mehr erforderlich ist. Einzelheiten zur Ansteuerung und zur Ausbildung eines derartigen elektrischen oder elektronischen Differentials sind jedoch der DE 10 2004 014 773 A1 nicht zu entnehmen. Des weiteren erfordert diese Lösung aufgrund des zusätzlichen Motors und der damit verbundenen Mechanik einen höheren Aufwand, der von der hier vorgestellten Erfindung vollständig vermieden wird.

Aus US 2010/134053 A1 ist eine Steuervorrichtung für Drehmaschinen bekannt, wobei sinusförmige und rechteckförmige Pulsweitenmodulationen mit konstanten Pulsbreiten offenbart werden. JP S58 26570 A offenbart einen Transistor-Wechselrichter vom PWM-Spannungstyp.

Aus US 2010/004090 A1 ist eine Steuereinrichtung für ein Hybridfahrzeug bekannt, mit deren Hilfe angetriebene Radeinheiten unabhängig voneinander betätigbar sind. Es ist eine einzige Steuereinrichtung vorhanden, die über eine Umschalteinheit verfügt, um Motorgeneratoren für das linke und/oder rechte Vorderrad in Betrieb zu setzen. Heckantriebsseitig wird auf eine übliche Verbrennungskraftmaschine zurückgegriffen.

In EP 1 798 093 A1 wird die Ausbildung eines elektromechanischen Differentials beschrieben. Aus DE 103 32 228 A1 ist wiederum ein Steuerungsverfahren für einen bürstenlosen Elektromotor bekannt. Es soll ein geräuscharmer Synchronbetrieb geschaffen werden, der ohne direkte und indirekte Lageerfassung erfolgen kann.

Die US 2004/176899 A1 zeigt hingegen ein Verfahren zur Steuerung von Drehmomenten an einer Vielzahl von Rädern, um einen Radschlupf zu regulieren und um ein Korrekturmoment um eine Gierachse zu erzeugen. Aus US 2009/039809 A1 ist ein Verfahren bekannt, welches die Antriebs- und Regenerationseffizienz eines elektrischen Motors verbessern soll. Dies erfolgt, indem ein Encoder zwischen zwei Betriebsarten wechseln kann. Dieses Verfahren verbessert die Motoreffizienz.

US 5 991 671 A offenbart ein automatisches Fahrsteuerungssystem für ein Fahrzeug, das unabhängig von der Fahrzeuggeschwindigkeit eine zufriedenstellende Lenkkontrolle während der autonomen Fahrt bietet. Hierzu werden u.a. die Radgeschwindigkeiten und Bilddaten der linken und rechten Hinterräder von Raddrehzahlsensoren und Kameras erfasst. Aus WO 2010/119740 A1 ist hingegen ein Fahrzeug bekannt, welches vier Räder unabhängig voneinander steuern kann. In EP 1 982 886 A2 wird ein Lastkraftwagen beschrieben, wobei mehrere Räder des Lastkraftwagens einen Einzelradantrieb aufweisen.

Aus dem Vorgenannten ist es daher Aufgabe der Erfindung, ein weiterentwickeltes Verfahren zum Betreiben eines Fahrzeugs mit mindestens einer gelenkten und mindestens einer angetriebenen Achse anzugeben, wobei mindestens die angetriebene Achse mindestens zwei Radnabenelektromotoren besitzt, welche in das jeweilige Antriebsrad integriert sind. Erfindungsgemäß soll eine einfache und zuverlässige elektronische Steuerung für die Radnabenmotoren unter Bildung eines elektronischen Differentials realisiert werden, so dass ein sicherer Antrieb von Elektrofahrzeugen mit mehreren Radnabenmotoren und direkt angetriebenen Rädern möglich ist.

Die Lösung der Aufgabe der Erfindung erfolgt durch ein Verfahren gemäß der Lehre nach Patentanspruch 1, wobei die Unteransprüche mindestens zweckmäßige Ausgestaltungen und Weiterbildungen darstellen.

Es wird also von einem Verfahren zum Betreiben eines Fahrzeugs mit mindestens einer gelenkten und mindestens einer angetriebenen Achse ausgegangen, wobei mindestens die angetriebene Achse mindestens zwei Radnabenmotoren besitzt, welche in das jeweilige Antriebsrad integriert sind. Weiterhin ist eine elektronische Steuerung für die Radnabenmotoren vorhanden, wobei ein elektronisches Differential gebildet wird. Verfahrensgemäß werden Sensorsignale genutzt, die den jeweiligen Fahrvorgaben, insbesondere der Fahrgeschwindigkeit entsprechen.

Es ist ein Interface-Modul vorgesehen, welches aus den Sensorsignalen der Stellung des Fahrfußhebels und des Lenkhebels Korrekturfaktoren für die Vorgabewerte zur Steuerung der Radnabenmotoren ermittelt und an die diesbezüglichen Motorsteuerungen, die bevorzugt als BLDC-Steuerung ausgeführt sind, weiterleitet.

Zur Bestimmung der Vorgabewerte können bei einer bevorzugten Ausführungsform die jeweiligen aktuellen Drehzahlwerte der Motoren bestimmt und dem Interface-Modul zugeführt werden.

Einmalig wird für jedes Fahrzeug der Achsabstand und die Achsbreite ermittelt und zur Bestimmung der Korrekturfaktoren bereitgestellt.

Bei einer Ausführungsform der Erfindung erfolgt bei Kurvenfahrten eine automatische Begrenzung der maximalen Fahrgeschwindigkeit, was die Fahrsicherheit erhöht.

In einer weiteren Ausgestaltung kann durch die erfindungsgemäße Lösung im Fall eines Defekts einer der Motorsteuerungen und/oder eines Ausfalls eines Motors das Interface-Modul den betreffenden Pfad außer Betrieb nehmen und es kann der Antrieb des Fahrzeugs lediglich mit dem intakten Rad, umfassend Steuerung und Motor, fortgesetzt werden.

Über das Interface-Modul ist dafür Sorge getragen, dass die Motorsteuerung gemäß dem erfindungsgemäßen Verfahren beim Anfahren im Block- und beim anschließenden normalen Fahrbetrieb im Sinus-Betrieb gehalten wird.

Bei einer erkannten Blockierung oder Durchdrehen eines jeweiligen angetriebenen Rades kann sowohl eine Leistungsanpassung für das jeweilige Rad als auch das weitere angetriebene Rad der jeweiligen Achse erfolgen.

Die hier vorgestellte Erfindung löst die eingangs erwähnten Probleme bei Elektrofahrzeugen mit mehreren von Radnabenmotoren direkt angetriebenen Rädern. Das als Duo-Motorsteuerung bezeichnete Verfahren vereint zwei BLDC-Steuerungen mit einem zentralen Interface-Modul zu einer Einheit. Die BLDC-Steuerungen betreiben je einen BLDC-Motor, d.h. sie liefern über eine Leistungstreiberstufe die U, V und W-Signale für den Motor und werten dazu die vom Motor kommenden Signale der Hall-Sensoren aus.

Die Soll-Vorgaben erhalten die Steuerungen nicht mehr unmittelbar vom Gaspedal oder ähnliches, sondern vom Interface-Modul. Dieses wertet auch die von den Steuerungen kommenden Rückmeldungen über die genaue Drehzahl, die Leistungsaufnahme und eventuelle Fehlermeldungen aus. Diese Informationen aus den Steuerungen werden mit einbezogen, wenn das Interface-Modul aus den Fahrervorgaben die Vorgaben für die Steuerungen erzeugt. Neben der angeforderten Leistung, die der Fahrer über das Gaspedal (oder den Gasgriff etc.) vorgibt, fließt insbesondere die Fahrtrichtung mit ein, die über einen Lenkwinkelgeber, der mit der Lenkung des Fahrzeuges gekoppelt ist, zur Duo-Motorsteuerung gelangt. Weitere allgemeine Zustandsdaten wie der Batterieladestand fließen ebenfalls mit ein. Als Ausgabe erhält man die tatsächliche Momentangeschwindigkeit, die mit einem Tacho oder auf einem Display angezeigt werden kann, sowie Statusinformationen, die falls gewünscht oder erforderlich ebenfalls ausgewertet werden können.

Eine Aufgabe des Interface-Moduls ist die des elektronischen Differentials. Durch den konstruktionsbedingten Wegfall der Hinterachse und des mechanischen Differentials wird dessen Funktion auf elektronischem Weg nachgebildet. Während sich beim mechanischen Differential durch die an den Rädern auftretenden Reibungskräfte ein Gleichgewicht einstellt, wird dies von der Duo-Motorsteuerung anhand des Lenkwinkels errechnet und in Form unterschiedlicher Vorgaben an die einzelnen Steuerungen weitergeleitet. Zur dieser Berechnung sind außer dem variablen Lenkwinkel noch weitere feste Größen erforderlich, die vor der Inbetriebnahme einmalig in die Steuerung programmiert werden müssen.

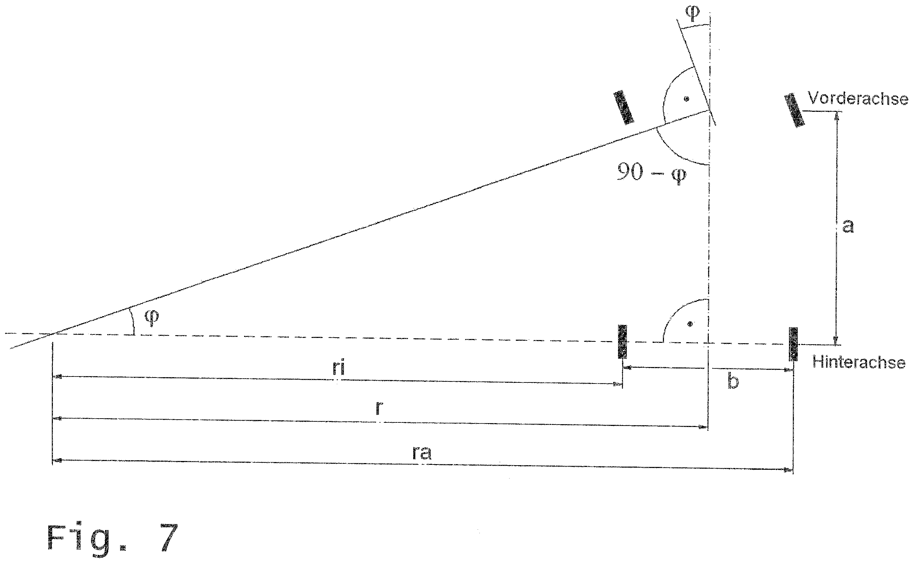

Die Grundlage der Berechnung ist der zu einem bestimmten Lenkwinkel $\varphi$ gehörende Kurvenradius, bezogen auf die Fahrzeugmitte. Anhand von Fig. 7 erkennt man unmittelbar, dass als weitere Größe erfindungsgemäß der Achsabstand $a$ einfließt. Man erhält unmittelbar das Ergebnis:

$$ r = a \cdot \tan(90° - \varphi) $$

Man beachte die Polstelle bei $\varphi = 0$, die im Folgenden eliminiert wird. Die Korrekturfaktoren für die Drehzahl bzw. die Geschwindigkeit bestimmen sich unter Verwendung der Breite b der Achse zu

$$ \frac{ri}{r} = \frac{r - \dfrac{b}{2}}{r} = 1 - \frac{b}{2r} = 1 - \frac{b}{2a \cdot \tan(90° - \varphi)} $$

$$= 1 - \frac{b}{2a} \cdot \tan(\varphi)$$

für den Motor auf der Innenseite der Kurve und entsprechend

$$\frac{ra}{r} \quad = 1 + \frac{b}{2a} \cdot \tan(\varphi)$$

für den Motor auf der Außenseite.

Erfindungsgemäß wird die für die momentane Geschwindigkeitsvorgabe erforderliche Drehzahl bzw. Leistung für den jeweiligen Motor mit *ri/r* bzw. *ra/r* multipliziert und vom Interface-Modul an die entsprechenden Steuerungen geleitet. Die Polstelle aus der ersten Gleichung ist durch die Quotientenbildung beseitigt, im Fall $\varphi = 0$ gilt $\tan(\varphi) = 0$ und man errechnet beide Korrekturfaktoren wie erwartet zu 1. Da der Lenkwinkel in jedem Fall deutlich kleiner als 90° ist, treten keine mathematischen Probleme auf.

Da permanenterregte Motoren im Schiebebetrieb als Generatoren arbeiten, kann Bewegungsenergie des Fahrzeuges als elektrische Energie zurück in die Batterie gespeist werden. Eine Leistungsendstufe enthält in den verwendeten Transistoren integrierte Dioden. Alternativ dazu können geeignete Dioden zusätzlich in die Endstufe aufgenommen werden. Diese sperren aufgrund ihrer Orientierung im normalen Betrieb. Wird jedoch während der Fahrt das Gaspedal ganz oder teilweise zurückgenommen, dann dreht der Motor zunächst mit einer höheren Geschwindigkeit, als dies durch die Vorgabe der Fall wäre. Als Folge wird im Motor eine höhere Spannung induziert, als von außen zugeführt wird, somit erfolgt eine Rückspeisung. Durch die elektrische Belastung des nun als Generator arbeitenden Motors wird dieser und somit das Fahrzeug gebremst, ohne dass die kinetische Energie des Fahrzeuges komplett in Wärme umgewandelt wird. Zumindest ein Teil davon wird in die Batterie zurückgeführt, es handelt sich also um eine sogenannte Nutzbremsung.

Die Erfindung soll nachstehend anhand eines Ausführungsbeispiels sowie unter Zuhilfenahme von Figuren näher erläutert werden.

Hierbei zeigen:

Fig. 1 einen prinzipiellen Aufbau eines BLDC-Motors, bestehend aus einer feststehenden, ringförmigen Anordnung von Spulen als Stator sowie einer ebenfalls ringförmigen Anordnung von Permanentmagneten als Rotor und die Verschaltung der Spulen mit den Anschlüssen der Phasen U, V und W;

Fig. 2 eine Prinzipschaltung zur Ansteuerung eines BLDC-Motors auf der Basis von Leistungs- Feldeffekttransistoren;

Fig. 3 die Parameterphasen U, V und W für den Blockbetrieb eines BLDC-Motors;

Fig. 4 eine Darstellung der Phasen U, V und W für einen Sinusbetrieb von BLDC-Motoren;

Fig. 5 ein Ablaufdiagramm zur Steuerung der Motoren ausgehend von einem Blockbetrieb beim Anfahren, hin zu einem geräuschärmeren Sinusbetrieb beim Fahrvorgang;

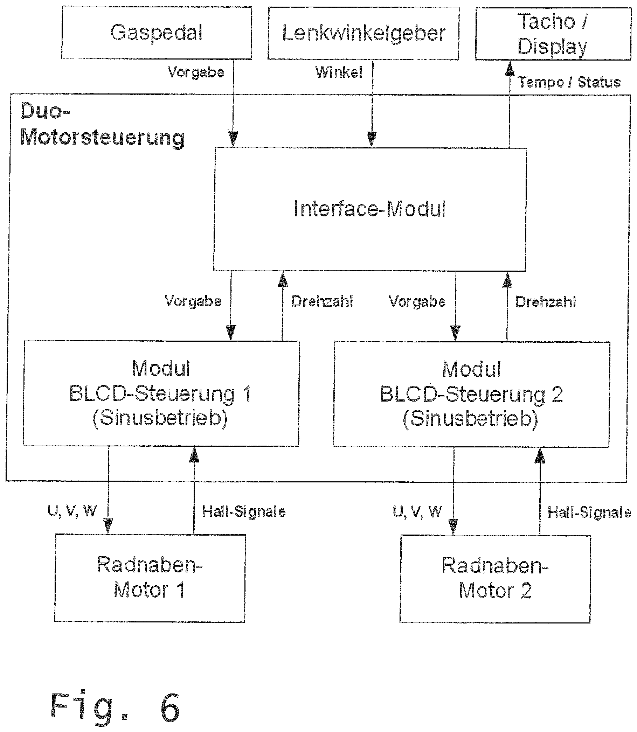

Fig. 6 ein Blockschaltbild des Aufbaus einer erfindungsgemäßen Anordnung zur Umsetzung des erfindungsgemäßen Verfahrens;

Fig. 7 eine Darstellung zur erfindungsgemäßen Grundlage der Berechnung der zu einem bestimmten Lenkwinkel gehörenden Kurvenradien, bezogen auf die Fahrzeugmitte und

Fig. 8 ein Ablaufdiagramm des erfindungsgemäßen Verfahrens zur Erläuterung der Funktionen des Interface-Moduls.

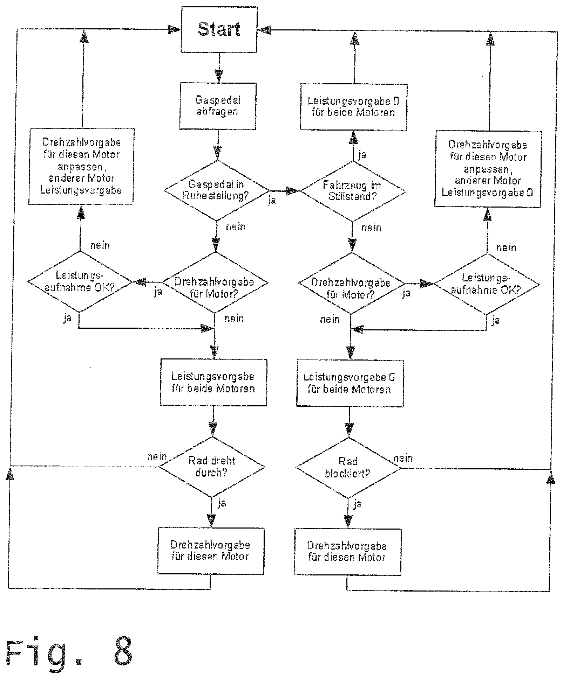

Wie aus der Fig. 8 entnehmbar ist, stellt sich als wichtigste Funktion des Interface-Moduls die Weiterleitung der Vorgabewerte des Fahrers an die einzelnen Steuerungen dar.

Hierfür werden in kurzen Abständen, quasi kontinuierlich oder kontinuierlich, der Fahrfußhebel bzw. ein derartiger Sensor und ein Lenkwinkelgeber abgefragt.

Aus dem Lenkwinkel werden dann die Korrekturfaktoren für die Motoren der angetriebenen Achse berechnet und an die jeweiligen Einzelmotorsteuerungen weitergeleitet.

Im Normalbetrieb ergeben sich hieraus Leistungsvorgaben für die Steuerungen. In engen Kurven kann das Interface-Modul die Geschwindigkeit limitieren, um ein Kippen des Fahrzeugs zu verhindern.

Bei bestimmten Situationen können jedoch spezielle Maßnahmen erforderlich werden. Zum einen kann bei glattem oder rutschigem Untergrund ein angetriebenes Rad durchdrehen. In diesem Fall registriert das Interface-Modul erfindungsgemäß eine plötzlich ansteigende Drehzahl und korrigiert dies durch eine Drehzahlvorgabe basierend auf der Drehzahl des anderen, im Regelfall gegenüberliegenden Rades. Greift das angetriebene Rad schließlich wieder, wird dies anhand der gestiegenen Leistungsaufnahme festgestellt und es wird auf definierte Leistungsvorgabewerte zurückgeschaltet.

Im anderen Fall kann bei einer Nutzbremsung ein Rad durch die Leistungsentnahme schnell zum Stehen kommen, wenn es auf rutschigem Boden keinen Halt findet und somit vom Fahrzeug nicht mehr in Bewegung gehalten wird. Auch hier erfolgt eine vom anderen Rad abhängige Drehzahlvorgabe, bis wieder ausreichende Bodenhaftung festgestellt wird.

Im Fall eines Defekts eines Motors bzw. einer der BLDC-Steuerungen schaltet das Interface-Modul auf einen Notbetrieb um. Dabei wird nur der verbleibende, intakte Motor verwendet, mit dem das Fahrzeug dann noch weiterbewegt werden kann. So lässt sich das Fahrzeug mit verminderter Leistung sicher z.B. noch an den Straßenrand bewegen und aus dem laufenden Verkehr entfernen.

Wie beim mechanischen Äquivalent wird durch das elektronische Differential in Kurven eine unnötige Reibung des Rades auf dem Untergrund verhindert. Dadurch wird gleichzeitig die Bodenhaftung verbessert, da keines der Räder zwangsweise durchdrehen muß, wie dies bei einer starren Verbindung beider Antriebsräder der Fall wäre. Auch bei einer Nutzbremsung ergibt sich ein ähnlicher stabilisierender Effekt. Die erzeugte elektrische Energie und somit die Bremswirkung ist zumindest näherungsweise proportional zur Geschwindigkeit des Motors. Somit wird bei einer Nutzbremsung in Kurven im außen liegenden Rad eine höhere Bremswirkung erzielt als im innen liegenden Rad. Dieses Verhalten verbessert insbesondere beim Bremsen in Kurven die Spurtreue des Fahrzeuges.

Auf rutschigen Untergründen, etwa bei Eisflächen oder Ölspuren, kann es leicht zum Durchdrehen oder Blockieren eines Rades kommen. In diesen Fällen wird das betroffene Rad zwangsweise auf der richtigen Geschwindigkeit gehalten. Unter Umständen wird allein dadurch die Haftung wieder hergestellt. Setzt diese wieder ein, hat das Rad bereits die erforderliche Geschwindigkeit. Daher kann es nicht zu einem Ausbrechen des Fahrzeuges kommen, wie es z.B. bei einem blockierten Rad der Fall sein könnte.

Zusammenfassend ist die Duo-Motorsteuerung als eine Einheit konzipiert, die einerseits dazu dient, mehrere Motoren synchron anzusteuern, andererseits in Bezug auf die Integration ins Fahrzeug die Einfachheit einer Einzelsteuerung besitzt.

Einzig der erforderliche Lenkwinkelgeber ist gegenüber einer Einzelsteuerung zusätzlich erforderlich. Sämtliche Synchronisationen, die für das reibungslose Zusammenarbeiten mehrerer Motoren erforderlich sind, werden von der Duo-Motorsteuerung übernommen. Bei der Integration in ein Fahrzeug muss vor der Inbetriebnahme einmalig ein Parametersatz bestehend aus Achsabstand und -breite programmiert werden. In der Praxis wird die Duo-Motorsteuerung auf der Basis eines oder mehrerer Mikrokontroller aufgebaut. Es sei jedoch erwähnt, dass die genannten Funktionalitäten prinzipiell auch mithilfe analoger Schaltungen realisiert werden könnten. Bei der Kommunikation zwischen den einzelnen Modulen kann sowohl auf analoge als auch auf digitale Signale zurückgegriffen werden.

Die hier vorgestellte bevorzugte Ausführung für ein zweiachsiges Fahrzeug mit zwei angetriebenen Hinterrädern kann leicht auf ein mit allen Rädern angetriebenes drei- oder vierrädriges Fahrzeug erweitert werden. Die Zahl der in die Duo-Motorsteuerung integrierten BLDC-Steuerungen ist ohne weiteres auf drei, vier oder mehr erweiterbar. Für ein herkömmliches, vierrädriges Fahrzeug ist eine Variante mit vier Steuerungen und vier Motoren ideal, um die Leistung des Fahrzeuges zu erhöhen. Es müssen entsprechend die Korrekturfaktoren für die einzelnen Steuerungen berechnet und implementiert werden, was leicht möglich ist.

Im Fahrbetrieb zeichnet sich die Duo-Motorsteuerung durch ein durchgängiges Sicherheitskonzept aus, das die Fahrlage auch unter widrigen Umständen stabilisiert und eine Reihe von Komfortfunktionen bietet.

**Patentansprüche**

1.   Verfahren zum Betreiben eines Elektrofahrzeugs mit mindestens einer gelenkten und mindestens einer angetriebenen Achse,
wobei die angetriebene Achse mindestens zwei Radnabenelektromotoren besitzt, welche in das jeweilige Antriebsrad integriert sind,
weiterhin mit Hilfe einer elektronischen Steuerung für die Radnabenmotoren unter Bildung eines elektronischen Differentials sowie auf der Basis von Sensorsignalen, die den Fahrvorgaben entsprechen,

   - wobei über ein Interface-Modul Motorsteuerungen der Radnabenmotoren beim Anfahren im Blockbetrieb und beim anschließenden normalen Fahrbetrieb im Sinusbetrieb gehalten werden,

• wobei beim Blockbetrieb eine Pulsweitenmodulation mit Pulsen konstanter Breite, entsprechend einer geforderten Leistung, erfolgt

• und beim Sinusbetrieb jeder von drei Motoranschlüssen über die Pulsweitenmodulation mit einem sinusförmigen Signal angesteuert wird, die drei Signale jeweils um 120° zueinander phasenverschoben sind und eine Positionsinformation des Motors durch Hall-Sensoren erfolgt,

- wobei das Interface-Modul außerdem bei Durchdrehen eines angetriebenen Rads bei glattem oder rutschigem Untergrund, eine plötzlich ansteigende Drehzahl registriert und dies durch eine Drehzahlvorgabe, die auf der Drehzahl des gegenüberliegenden Rades basiert, korrigiert,

- wobei mittels des Interface-Moduls außerdem aus den Sensorsignalen, der Stellung eines Fahrfußhebels bzw. einer Geschwindigkeitsvorgabe und eines Lenkwinkels $\varphi$ der gelenkten Vorderachse Korrekturfaktoren für Vorgabewerte zur Steuerung der Radnabenmotoren ermittelt und an die diesbezüglichen Motorsteuerungen weitergeleitet werden, wobei

• zur Bestimmung der Korrekturfaktoren einmalig für jedes Fahrzeug Achsabstand a und Achsbreite b ermittelt und bereitgestellt werden,

• und der bestimmte Lenkwinkel $\varphi$ in jedem Fall deutlich kleiner als 90° ist,

• wobei Grundlage zur Berechnung des bestimmten Lenkwinkels $\varphi$ ein zu dem Lenkwinkel $\varphi$ gehörende Kurvenradius r, bezogen auf die Fahrzeugmitte, ist

• und weiterhin der Achsabstand a in die Berechnung des Lenkwinkels $\varphi$ gemäß folgenden Gleichungen einfließt, wobei

$r = a \cdot \tan(90° - \varphi)$ gilt und eine Eliminierung einer Polstelle bei $\varphi = 0$ erfolgt, wobei

- für den Motor auf der Innenseite der Kurve

$$\frac{ri}{r} = \frac{r - \frac{b}{2}}{r} = 1 - \frac{b}{2r} = 1 - \frac{b}{2a \cdot \tan(90° - \varphi)}$$

$$= 1 - \frac{b}{2a} \cdot \tan(\varphi)$$

gilt und
- für den Motor auf der Außenseite der Kurve

$$\frac{ra}{r} = 1 + \frac{b}{2a} \cdot \tan(\varphi)$$

gilt,

sodass eine für eine momentane Geschwindigkeitsvorgabe erforderliche Drehzahl bzw. Leistung für den jeweiligen Radnabenmotor mit ri/r bzw. ra/r multipliziert und vom Interface-Modul an die Motorsteuerungen der Radnabenmotoren geleitet werden.

2. Verfahren nach Anspruch 1,
**dadurch gekennzeichnet, dass**
zur Bestimmung der Vorgabewerte die jeweiligen aktuellen Drehzahlwerte der Motoren bestimmt und dem Interface-Modul zugeleitet werden.

3. Verfahren nach einem der vorangegangenen Ansprüche,
**dadurch gekennzeichnet, dass**
bei Kurvenfahrten eine automatische Begrenzung der maximalen Fahrgeschwindigkeit erfolgt.

4. Verfahren nach einem der vorangegangenen Ansprüche,
**dadurch gekennzeichnet, dass**

im Fall eines Defekts einer der Motorsteuerungen und/oder eines Motors das Interface-Modul den betreffenden Pfad außer Betrieb nimmt und der Antrieb des Fahrzeugs lediglich mit dem intakten Pfad fortgesetzt wird.

**5.** Verfahren nach einem der vorangegangenen Ansprüche,
**dadurch gekennzeichnet, dass**
beim erkannten Blockieren oder Durchdrehen eines jeweiligen angetriebenen Rades sowohl eine Leistungsanpassung für das jeweilige Rad als auch das weitere angetriebene Rad der jeweiligen Achse vorgenommen wird.

**Claims**

**1.** A method for operating an electric vehicle having at least one steered axle and at least one driven axle,
wherein the driven axle has at least two electric motors for wheel hubs, which electric motors are integrated into the respective driving wheel,
furthermore, using an electronic control for the wheel hub motors while forming an electronic differential, and on the basis of sensor signals corresponding to the traveling specifications,

- wherein, via an interface module, motor controllers of the wheel hub motors are kept in block operation during starting and in sine operation during a subsequent normal traveling operation,

• wherein in the block operation, a pulse width modulation is performed with pulses of a constant width corresponding to a required output,
• and in the sine operation, each one of three motor connections is controlled with a sinusoidal signal via the pulse width modulation, the three signals each are mutually phase-shifted by 120°, and a position information of the motor is performed by Hall sensors,

- wherein the interface module, in addition, registers an abruptly increasing rotational speed when a driven wheel is spinning due to a slick or slippery underground, and corrects this by a speed specification which is based on the rotational speed of the opposite wheel,
- wherein in addition, by means of the interface module, correction factors for specification values for controlling the wheel hub motors are detected from the sensor signals, a position of a pedal or a speed specification, and a steering angle $\varphi$ of the steered front axle, and are forwarded to the related motor controllers, wherein

• for determining the correction factors, the axle distance a and the axle width b are detected and provided once for each vehicle,
• and the determined steering angle $\varphi$ is in each case distinctly smaller than 90°,
• wherein a curve radius r associated to the steering angle $\varphi$ and related to the vehicle center is the basis for calculating the determined steering angle $\varphi$,
• and furthermore, the axle distance a enters into the calculation of the steering angle $\varphi$, wherein
$r = a \cdot \tan(90°-\varphi)$, and a pole point is eliminated at $\varphi = 0$, wherein

- for the motor on the inner side of the curve

$$\frac{ri}{r} = \frac{r - \frac{b}{2}}{r} = 1 - \frac{b}{2r} = 1 - \frac{b}{2a \cdot \tan(90° - \varphi)}$$

$$= 1 - \frac{b}{2a} \cdot \tan(\varphi)$$

, and
- for the motor on the outer side of the curve

$$\frac{ra}{r} = 1 + \frac{b}{2a} \cdot \tan(\varphi)$$

,

so that a rotational speed and output, respectively, required for an actual speed specification for the respective wheel hub motor are multiplied by ri/r or ra/r and are transmitted to the motor controllers of the wheel hub motors by the interface module.

2. The method according to claim 1,
**characterized in that**,
for determining the specification values, the respective current speed values of the motors are determined and transferred to the interface module.

3. The method according to any one of the preceding claims,
**characterized in that**,
when traveling in curves, an automatic delimitation of the maximum travel speed is performed.

4. The method according to any one of the preceding claims,
**characterized in that**,
in case of a defect of one of the motor controllers and/or of a motor, the interface module takes the corresponding path out of operation, and the driving of the vehicle is continued merely by means of the intact path.

5. The method according to any one of the preceding claims,
**characterized in that**,
when a blocking or spinning of a respective driven wheel is identified, both an output adjustment for the respective wheel and also the further driven wheel of the respective axle is performed.


**Revendications**

1. Procédé de fonctionnement d'un véhicule électrique comportant au moins un essieu directeur et au moins un essieu moteur,
l'essieu moteur possédant au moins deux moteurs électriques de moyeu de roue qui sont intégrés dans la roue motrice respective,
en outre à l'aide d'une commande électronique pour les moteurs de moyeu de roue avec formation d'un différentiel électronique et sur la base de signaux de capteurs qui correspondent aux consignes de conduite,

   - dans lequel, par l'intermédiaire d'un module d'interface, des commandes de moteur des moteurs de moyeu de roue sont maintenues en mode onde carrée pendant le démarrage et en mode sinusoïdal pendant le mode de conduite normal ultérieur,

      • dans lequel, en mode onde carrée, une modulation de largeur d'impulsion avec des impulsions de largeur constante, correspondant à une puissance demandée, a lieu
      • et, en mode sinusoïdal, chacune des trois connexions de moteur est commandée par la modulation de largeur d'impulsion avec un signal sinusoïdal, les trois signaux sont déphasés de 120° les uns par rapport aux autres et une information de position du moteur est fournie par des capteurs Hall,

   - dans lequel le module d'interface enregistre en outre une augmentation soudaine de la vitesse de rotation lorsqu'une roue motrice patine sur une surface lisse ou glissante et corrige celle-ci par une consigne de vitesse de rotation basée sur la vitesse de rotation de la roue opposée,
   - dans lequel, au moyen du module d'interface, des facteurs de correction pour des valeurs de consigne pour la commande des moteurs de moyeu de roue sont en outre déterminés à partir des signaux de capteurs, de la position d'une pédale d'accélérateur ou d'une consigne de vitesse et d'un angle de braquage φ de l'essieu avant directeur et transmis aux commandes de moteur correspondantes, dans lequel

      • pour déterminer les facteurs de correction une fois pour chaque véhicule, l'écartement des essieux a et la largeur d'essieu b sont déterminés et fournis,

• et l'angle de braquage φ déterminé est dans tous les cas nettement inférieur à 90°,

• la base du calcul de l'angle de braquage φ déterminé étant un rayon de courbe r, correspondant à l'angle de braquage φ, par rapport au centre du véhicule,

• et l'écartement des essieux a intervient en outre dans le calcul de l'angle de braquage φ selon les équations suivantes, où $r = a \cdot tan(90° - \varphi)$ et une élimination d'un pôle a lieu à $\varphi = 0$,

$$\frac{ri}{r} = \frac{r - \frac{b}{2}}{r} = 1 - \frac{b}{2r} = 1 - \frac{b}{2a \cdot \tan(90° - \varphi)}$$

$$= 1 - \frac{b}{2a} \cdot \tan(\varphi)$$

s'appliquant pour le moteur du côté intérieur de la courbe et

$$\frac{ra}{r} = 1 + \frac{b}{2a} \cdot \tan(\varphi)$$

s'appliquant pour le moteur du côté extérieur de la courbe,

de sorte qu'une vitesse de rotation ou une puissance du moteur de moyeu de roue respectif nécessaire pour une consigne de vitesse instantanée est multipliée par ri/r, respectivement ra/r, et transmise par le module d'interface aux commandes de moteur des moteurs de moyeu de roue.

2. Procédé selon la revendication 1,
**caractérisé en ce que**,
pour déterminer les valeurs de consigne, les valeurs de vitesse de rotation actuelles respectives des moteurs sont déterminées et transmises au module d'interface.

3. Procédé selon l'une des revendications précédentes,
**caractérisé en ce que**
la vitesse de marche maximale est limitée automatiquement dans les courbes.

4. Procédé selon l'une des revendications précédentes,
**caractérisé en ce que**,
en cas de défaut d'une des commandes de moteur et/ou d'un moteur, le module d'interface met hors service le trajet correspondant et l'entraînement du véhicule est poursuivi uniquement avec le trajet intact.

5. Procédé selon l'une des revendications précédentes,
**caractérisé en ce que**,
en cas de blocage ou de patinage d'une roue motrice respective, on effectue une adaptation de puissance à la fois pour la roue respective et pour l'autre roue motrice de l'essieu respectif.

Fig. 1

Fig. 2

Fig. 3

Fig. 4

Fig. 5

| Gaspedal | Lenkwinkelgeber | Tacho / Display |
|---|---|---|

Vorgabe     Winkel     Tempo / Status

**Duo-Motorsteuerung**

Interface-Modul

Vorgabe   Drehzahl     Vorgabe   Drehzahl

| Modul BLCD-Steuerung 1 (Sinusbetrieb) | Modul BLCD-Steuerung 2 (Sinusbetrieb) |
|---|---|

U, V, W    Hall-Signale      U, V, W    Hall-Signale

| Radnaben-Motor 1 | Radnaben-Motor 2 |
|---|---|

# Fig. 6

Fig. 7

17

```
                              ┌──────────┐
                    ┌────────▶│  Start   │◀────────┐
                    │         └──────────┘         │
                    │              │               │
                    │              ▼               │
                    │      ┌──────────────┐  ┌──────────────────┐
                    │      │  Gaspedal    │  │ Leistungsvorgabe 0│
                    │      │  abfragen    │  │ für beide Motoren │
                    │      └──────────────┘  └──────────────────┘
┌────────────────┐  │              │               ▲
│ Drehzahlvorgabe│  │              ▼              ja│              ┌────────────────┐
│ für diesen Motor│ │          ◇          ◇         │              │ Drehzahlvorgabe│
│  anpassen,     │  │     Gaspedal in   Fahrzeug im │              │ für diesen Motor│
│  anderer Motor │  │     Ruhestellung?  Stillstand?│              │   anpassen,    │
│Leistungsvorgabe│  │          ◇    ja   ◇          │              │  anderer Motor │
└────────────────┘  │           │  ────▶           │              │Leistungsvorgabe 0│
        ▲           │         nein        nein     │              └────────────────┘
        │nein       │           ▼          ▼                            ▲
        ◇           │          ◇          ◇         nein                │
   Leistungs-       │     Drehzahlvorgabe Drehzahlvorgabe          Leistungs-
   aufnahme OK?     │     für Motor?     für Motor?                aufnahme OK?
        ◇     ja    │          ◇    ja   ◇    ja                        ◇
         ja  ◀──────┘         nein       nein                          ja
         │                     ▼          ▲                            │
         │              ┌──────────────┐ ┌──────────────────┐          │
         │              │Leistungsvorgabe││Leistungsvorgabe 0│          │
         │              │für beide Motoren││für beide Motoren│          │
         │              └──────────────┘ └──────────────────┘          │
         │                     │          │                            │
    nein │                     ▼          ▼          nein              │
         │                    ◇          ◇                             │
         │                 Rad dreht    Rad                            │
         │                 durch?      blockiert?                      │
         │                    ◇          ◇                             │
         │                    ja         ja                            │
         │                    ▼          ▼                             │
         │            ┌──────────────┐ ┌──────────────┐                │
         │            │Drehzahlvorgabe││Drehzahlvorgabe│                │
         │            │für diesen Motor││für diesen Motor│             │
         │            └──────────────┘ └──────────────┘                │
         └──────────────────────────────────────────────────────────┘
```

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112004002360 T5
- DE 102004014773 A1
- US 2010134053 A1
- JP S5826570 A
- US 2010004090 A1
- EP 1798093 A1
- DE 10332228 A1
- US 2004176899 A1
- US 2009039809 A1
- US 5991671 A
- WO 2010119740 A1
- EP 1982886 A2